# EUROPEAN PATENT SPECIFICATION

(11) **EP 1 778 548 B1**
(45) Date of publication and mention of the grant of the patent: **21.05.2008**
(21) Application number: 05761181.6
(22) Date of filing: 18.07.2005
(51) Int. Cl.: B65B 51/30

(54) **SEALING AND TRANSVERSAL CUTTING DEVICE FOR LOOSE PRODUCT PACKAGING SYSTEMS**
VERSIEGEL- UND QUERSCHNEIDEVORRICHTUNG FÜR SYSTEME ZUR VERPACKUNG LOSER PRODUKTE
DISPOSITIF DE FERMETURE ET DE DECOUPE TRANSVERSALE POUR MACHINES D'EMBALLAGE DE MATERIAU EN VRAC

(30) Priority: 23.07.2004 IT MI20041496
(43) Date of publication of application: 02.05.2007
(73) Proprietor: Altopack S.P.A., 55011 Altopascio (LU) (IT)
(72) Inventor: VEZZANI, Paolo, I-55012 Capannori (LU) (IT)
(74) Representative: Mittler, Enrico
(86) International application number: PCT/EP2005/053432
(87) International publication number: WO 2006/008282

(56) References cited:
- EP-A- 0 560 988
- EP-A- 0 718 195
- EP-A- 1 253 085
- EP-A- 1 362 790
- US-A- 4 563 862
- US-B1- 6 519 922

## Description

The present invention refers to a sealing and transversal cutting device for loose product packaging systems.

The operations of filling and closing plastic bags containing loose products such as crisps, biscuits, salted snacks or similar, are extremely critical.

In conventional machines the sealing and cutting of the plastic film come about by means of a couple of pincers rotating in opposite senses that support sealing means and a blade. When said pincers meet themselves during rotation, they press the film together, seal it and cut it.

A common problem of these machines is that in order to prevent the product that is being packaged from remaining caught between the pincers it is necessary to interrupt the flow of the product.

The numerous interruptions that follow during the delivery of the product being packaged causes a limitation of the production and the frequent blocking of the product inside the tubular film from which the single bags are formed, in particular if the product is light-weight in comparison to the volume, such as crisps, pop-corn, ... etc.

There are machines, for example as described in US-5540035, that have a stage of pre-accumulation prior to the sealing and cutting stage, which blocks the flow of the product being packaged towards the abovementioned sealing and cutting stage by means of pincers moved by levers that clamp the passage channel of the film. In this case a batch is created upstream of the clamp as the machine that feeds the product being packaged does not stop. Once the film has been sealed and cut in further downstream area, the clamping pincers open and the product "falls" downwards where it again accumulates.

The quantity of product that accumulates in the sealing and cutting stage must be such that, when the pincers clamp the film, it prevents the product from being caught between them. The pincers of the pre-accumulation stage must therefore act at the right moment so as to avoid excessive passage of the product. The same flow of product delivered by the machine must be set with precision.

The disadvantage of this system consists in having to use practically two devices that have to be synchronised with absolute precision.

For example in EP-1319600 and EP-0666215, unique devices are known that enable both the block of the flow of product being packaged and the sealing and cutting operations. In said devices the block is determined by a system of arms connected rigidly to the pincers, which have end bars that clamp the film upstream and downstream of the pincers. Said rigidity can create problems in the phases of setting the device. The blocking bars must be such that they clamp the film, which is usually a few millimetres thick. It is extremely easy to make positioning error thus enabling the product being packaged to "invade" the sealing and cutting area. It can also happen that there is interference between said bars, with the risk of seriously damaging the device.

Said system of rigid arms also causes problems of overall dimensions during the rotation of the pincers when they occupy non-working positions.

EP 1362790 and US6519922 disclose very complex devices with spring members actuating bar members.

EP 1253085 discloses a device according to the preamble of claim 1.

Object of the present invention is to produce a film sealing and cutting device that comprises a flexible mechanism, has limited overall dimensions and is easy to use, that is capable of preventing the product being packaged from being caught between the sealing and cutting pincers.

In accordance with the invention this object is achieved with a film sealing and cutting device as disclosed in claim 1.

The presence of the springs gives flexibility to the mechanism guaranteeing the opening of the plates and thus the prestretching of the film in function of the position of the mechanisms themselves. The plates are thus mobile in relation to the pincers. In addition when they are not in the working position the plates tend to "wind" the pincers, so that the rotating mechanism has extremely reduced overall dimensions.

The characteristics of the present invention will be made even more evident by the following detailed description of an embodiment thereof illustrated as non-limiting example in the enclosed drawings, in which:
Figure 1 shows a side view of the device according to the present invention with the pincers and the relative mechanisms in a horizontal position, opposed to each other;
Figure 2 shows a side view of the device according to the present invention with pincers and mechanisms in a vertical position orientated upwards;
Figure 3 shows a side view of the device in a position successive to that of Figure 2;
Figure 4 shows a side view of the device in a position successive to that of Figure 3 when the plates start to open;
Figure 5 shows a side view of the device in a position successive to that of Figure 4;
Figure 6 shows a side view of the device in a position successive to that of Figure 5 in which the opening of the plates has been completed and the pincers clamp the film;
Figure 7 shows a side view of the device in a position successive to that of Figure 6 in which the mechanisms are horizontal one in front of the other with the cutting means in the phase of cutting the film;
Figure 8 shows a side view of the device in a position successive to that of Figure 7 after the film has been cut;
Figure 9 shows a side view of the device in a position successive to that of Figure 8;
Figure 10 shows a side view of the device in a position successive to that of Figure 9;
Figure 11 shows a side view of the device in a position successive to that of Figure 10 in which the mechanisms are in a vertical position orientated downwards with the plates completely closed;
Figure 12 shows a plan view from above of the device in the same position as Figure 1;
Figure 13 shows a plan view from above of the device in the same position as Figure 7;
Figure 14 shows a section view according to the line XIV-XIV of Figure 12;
Figure 15 shows an enlarged partial view of Figure 1;
Figure 16 shows an enlarged partial view of Figure 1.

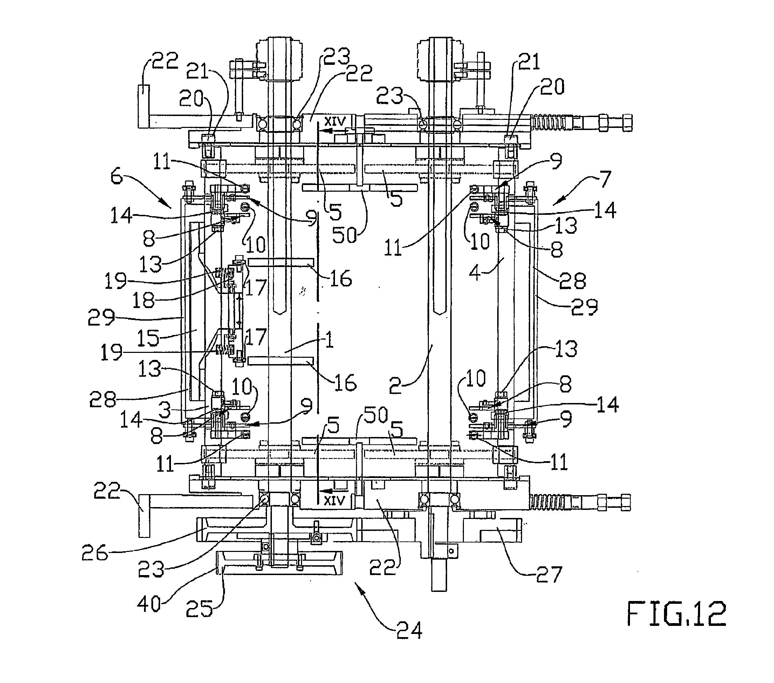

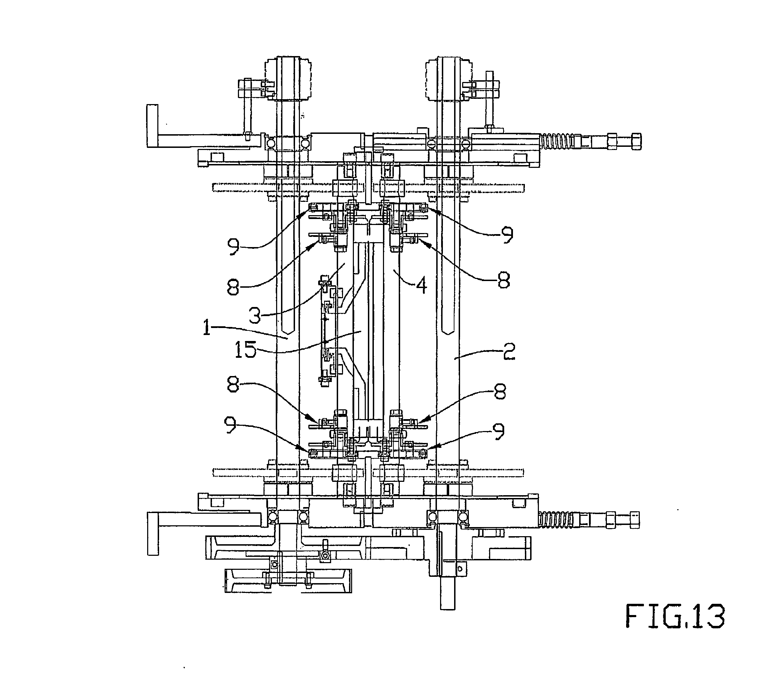

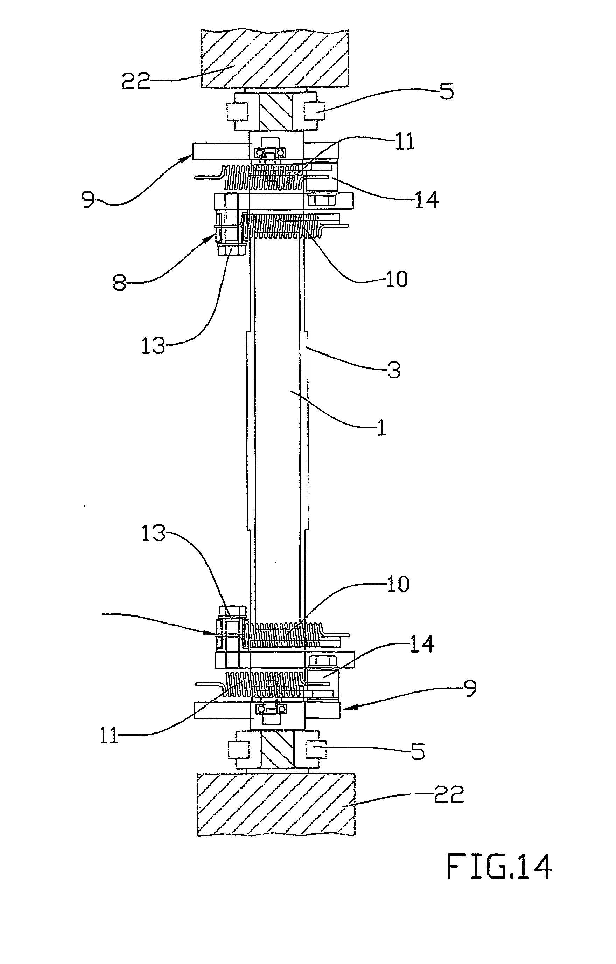

Figures 12-14 show a first transversal rotating shaft 1 and a second transversal rotating shaft 2 synchronised with each other, controlled by a motor that is not shown by means of a transmission 24 comprising a wheel 25 surrounded by a belt 40, a first toothed wheel 26 and a second toothed wheel 27.

A frame 22 supports said shafts 1-2 through bearings 23 suitable for ensuring the rotation in relation to the same frame 22.

Shims 5 connect the shafts 1-2, on which they are joined, to transversal support bodies 3-4..

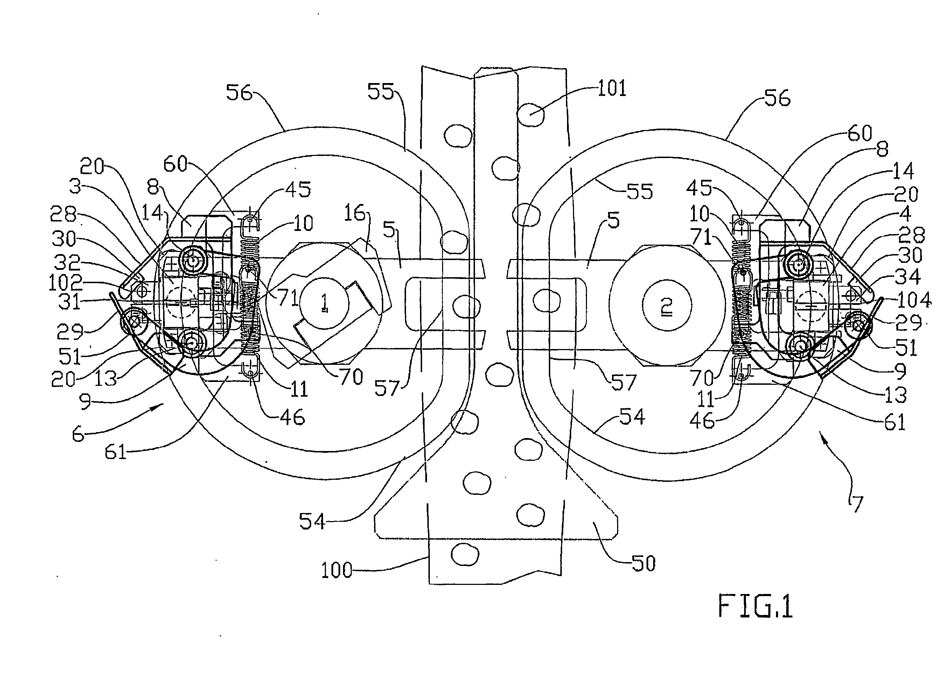

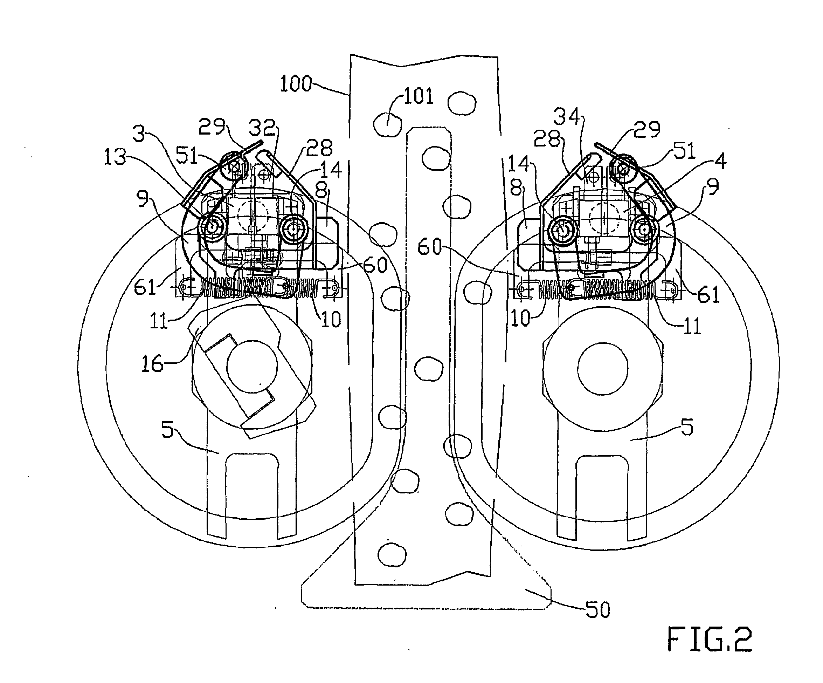

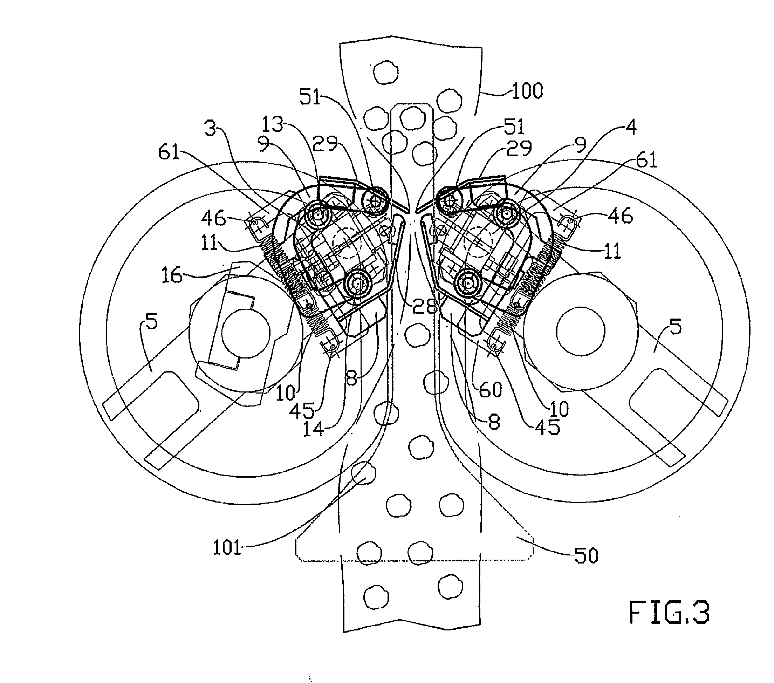

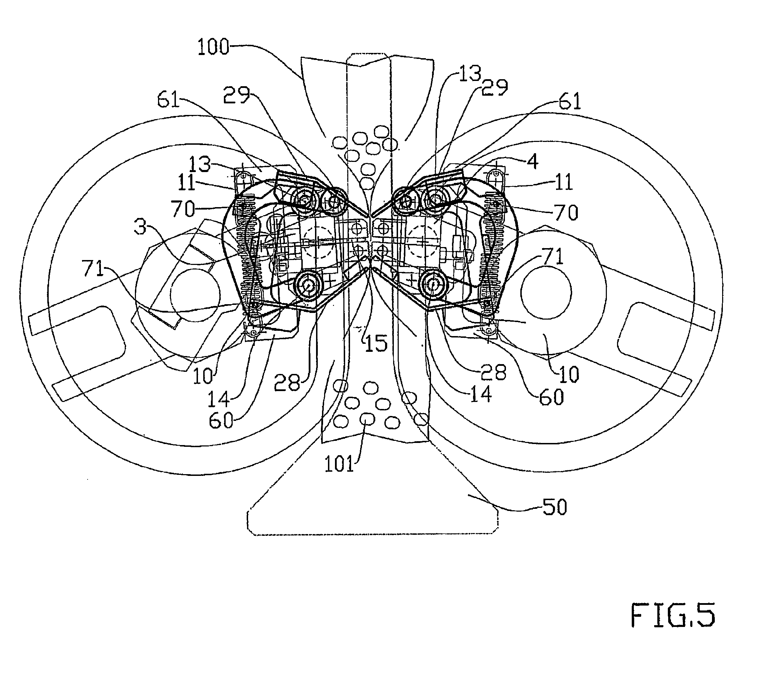

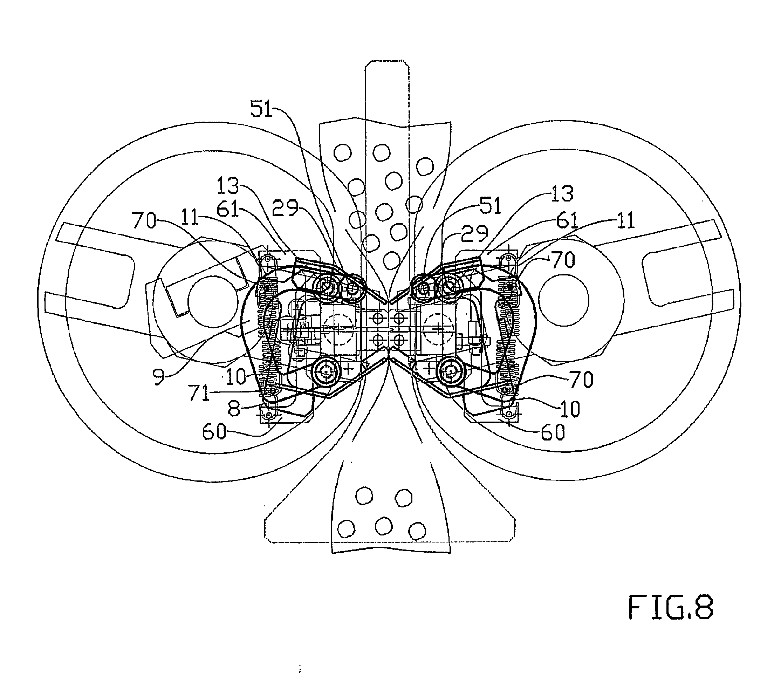

Rotating mechanisms 6-7, which are supported by said transversal bodies 3-4 respectively, comprise each one a mobile lower body 8 and a mobile upper body 9 fitted with small wheels 51, springs 10-11 and pincers 32 and 34 which in the work position (Figures 1-11) clamp and then release a plastic film 100 suitable for collecting product to be packaged 101. The springs 10-11 have a first extremity fixed to supports 60-61 of the mobile bodies 8-9 by means of pins 45-46, and a second extremity connected to mobile bodies 8-9 by means of pins 70-71.

Between the two rotating shafts 1-2 guide cams 50 are positioned for the preflattening connected to the frame 22.

The mobile bodies 8-9 are free to rotate around the pins 13-14 in one with the supports 60-61.

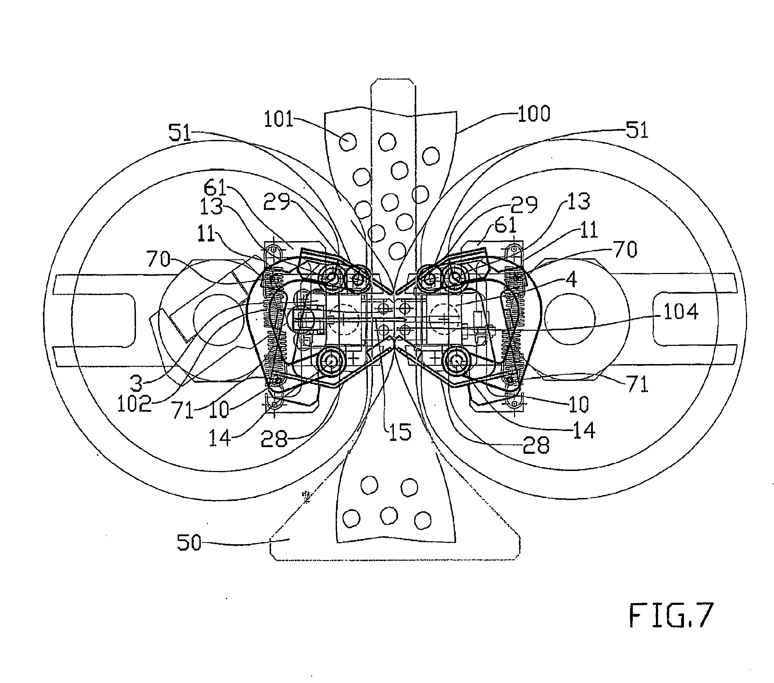

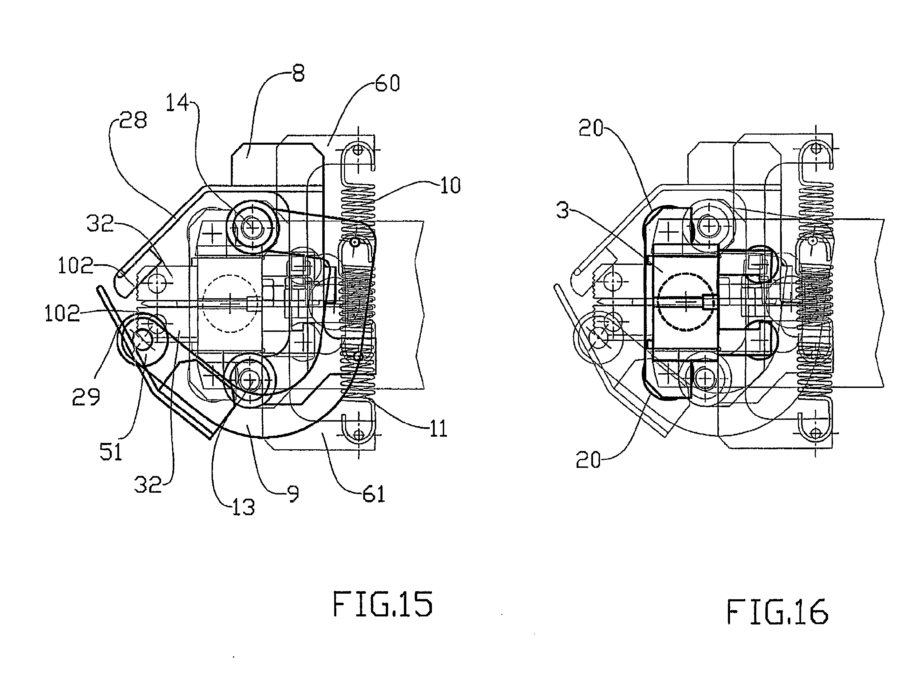

The transversal body 3 (highlighted in Figure 16) also supports a blade 15 which is movable between a work position and a rest position by means of guide cams 16 of the blade 15 joined on the shaft 1, which in certain angular positions (Figure 7) interfere with bearings 17 causing a body 18 to advance in one with the blade 15 that is forced to remain in the work position by transversal springs 19 housed partly in the transversal body 3 and partly in said body 18.

The blade 15 moves through a fissure 31 obtained in the pincers 32, and when it is in the work position (Figure 7) the extremity of the blade 15 partially occupies a fissure 33 obtained in the pincers 34.

The mobile bodies 8-9 also support respectively lower prestretching plates 28 and upper prestretching plates 29, as the lower plates 28 are fitted with feet 30.

Small wheels 20, associated to the transversal bodies 3-4, engage recesses 21 enabling the mechanisms 6-7 to follow an almost circular path. Lower joints 54 and lower joints 55 permit the connection of all the circular sections 56 with the straight sections 57.

As regards to the operation, a motor that is not shown in the Figures moves the belt 40 that makes the shaft 1 rotate. The interlocking between the toothed wheels 26-27 also enables the rotation of the second shaft 2.

Considering that of Figure 1 as a starting position of the device, the two shafts 1-2 rotate in opposite senses thus permitting the two mechanisms 6-7 to meet themselves where the plastic film 100 flows vertically in the straight section 57 of the path of the pincers 32, 34.

The prestretching plates 28, 29 in the Figures 1-11 and 15 are drawn with a thicker line than that of the other details drawn so as to highlight the relative motion.

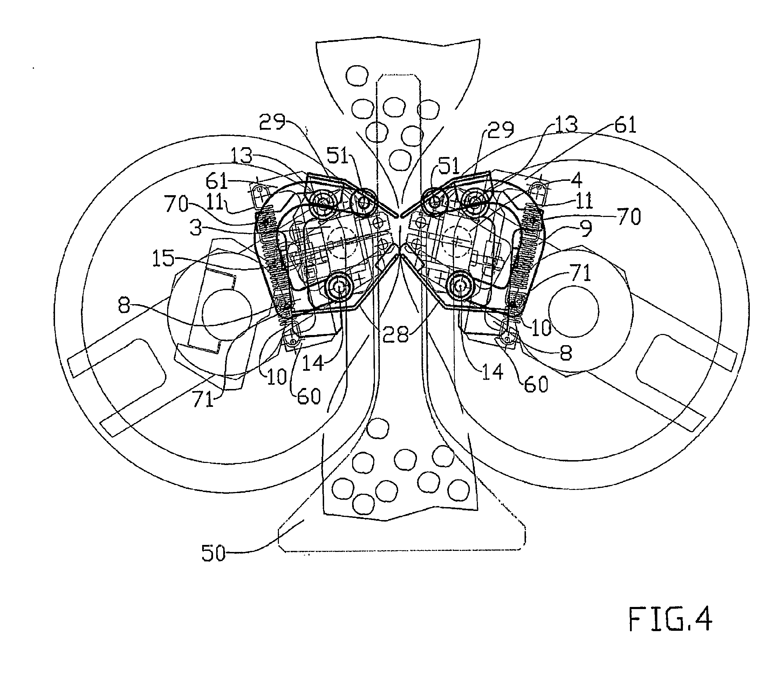

It can be seen in Figure 4 that the lower plates 28 meet themselves thereby prestretching the film, while the plates 29 are still slightly distanced. The pressure that is generated at the point of contact of the plates 28, due to the track set by the recess 21 that progressively becomes vertically straight by means of the joint 55, causes the same plates 28 to open. The feet applied on the lower plates 28 serve to make the interaction with the film 100 "softer" as it could otherwise be damaged. The mobile bodies 8 rotate around the pins 13 moving towards the pins 70 that lengthen the springs 10 against the force of reaction carried out by the same springs 10 that tend to close the plates 28.

The upper plates 29 also start to open as the small wheels 51 meet the cams 50 inducing the rotation of the bodies 9 around the pins 14 and the movement downwards of the pins 71 that thus lengthen the springs 11. So as the upper plates 29 open, it is necessary for the pressure deriving from the interaction between the small wheel 51 and the cams 50 to be greater than the counter force of the springs 11. The plates 29 do not come into contact with each other but they are however close enough as not to permit the product being packaged 101, that continues falling from above, to occupy the area between the two pincers 32, 34. The product being packaged 101 accumulates above the plates 29 until the mechanisms 6-7 detach from each other.

As explained above, one of the advantages of this device is exactly that of enabling the sealing and cutting operations without interrupting the feeding of the product being packaged 101 that thus results continuous.

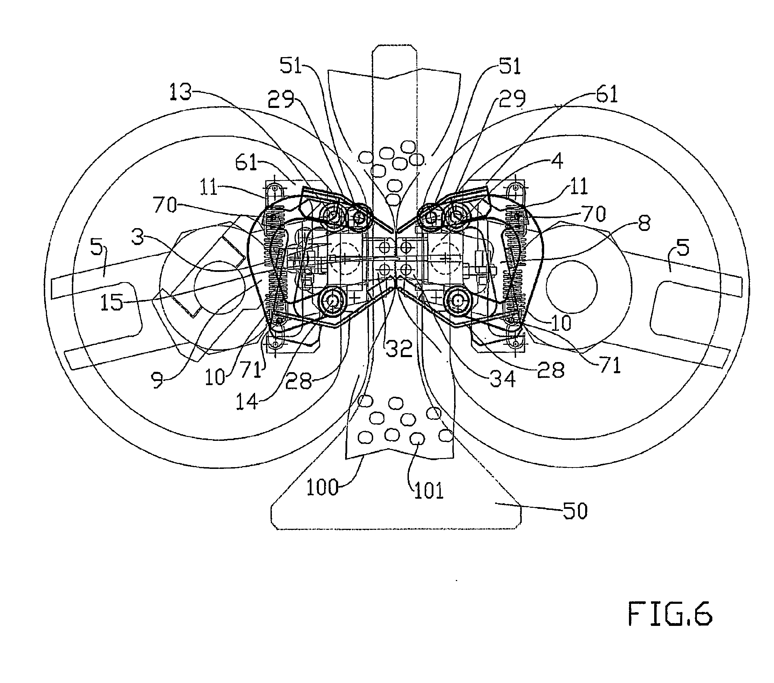

When the path becomes perfectly straight and vertical the movement of the plates 28-29 ends and the pincers 32 and 34 meet and clamp the film 100 (Figure 6).

Figure 7 shows the position in which the sealing and cutting comes about. In this position, in fact, sealing means 102, 104 associated to the front of the pincers 32, 34 clamp the film I00 between them, making the seal of the opposite flaps of the same. In addition the cams 16 come into contact with the bearings 17 causing the body 18 and thus the blade 15 that cuts the film 100 to move ahead. The pressure between the cams 16 and bearings 17 must be such to overcome the contrary force induced by the springs 19.

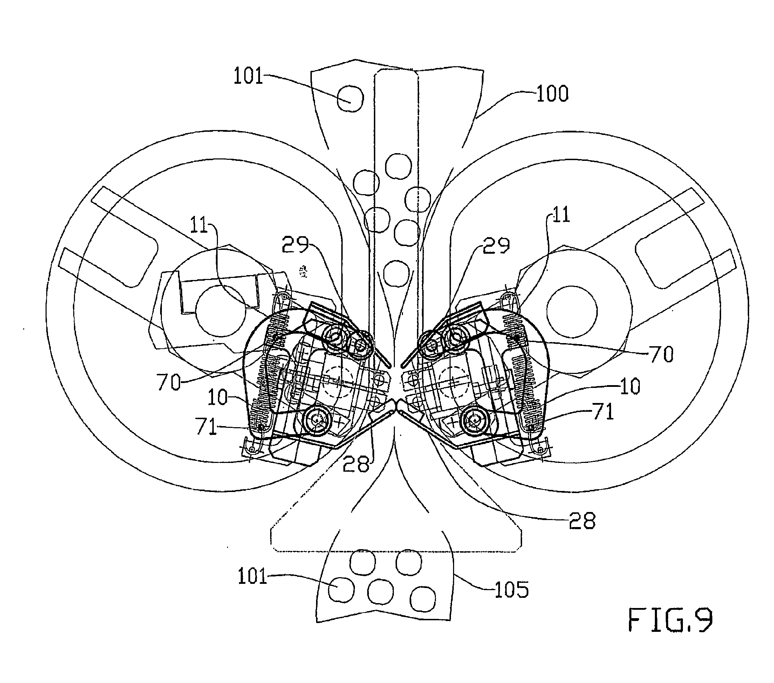

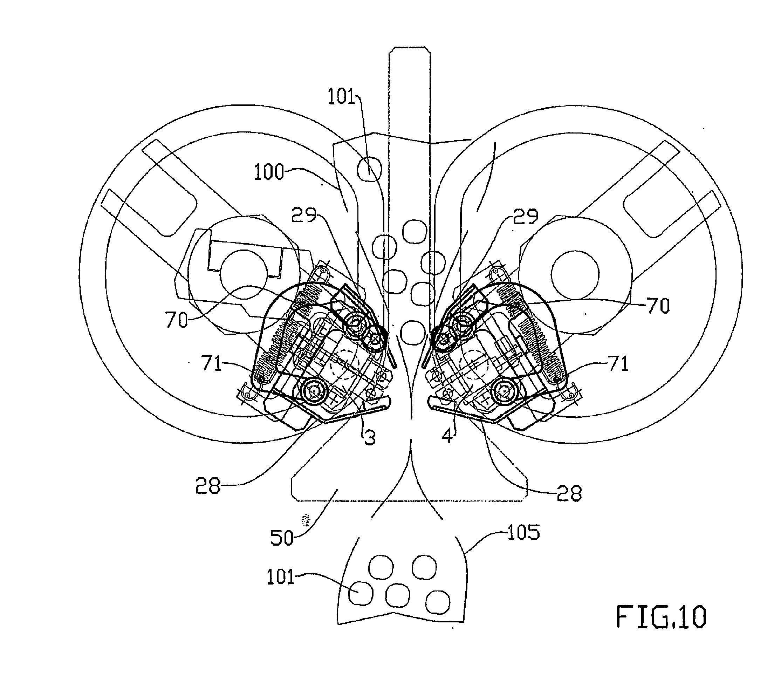

When the cut has been made the mechanisms (6-7) move downwards until they meet the lower joint 54 (Figure 9) that leads to the progressive disengagement of the lower plates 28 (figure 10) which thanks to the action of the springs 10 return to the initial closed position. In this phase there is the "fall" of the bag below 105 filled with product 101.

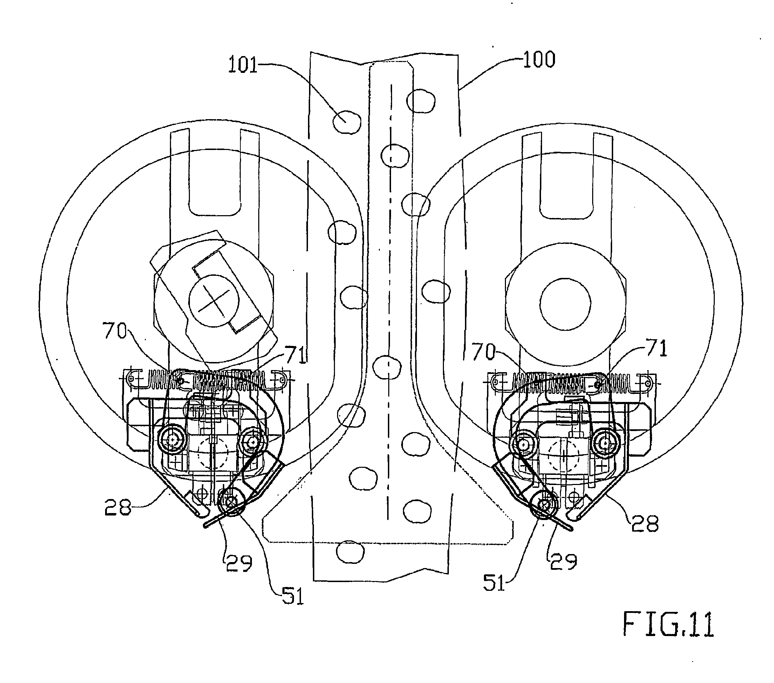

At the end of the lower joint 54, when the interaction between the small wheels 51 and the cams 50 does not come about, the upper plates 29 also return to the initial closed position in virtue of the force carried out by the springs 11 (Figure 11). At the moment in which the upper plates 29 start moving away, the product being packaged 101 starts to fall again inside the film 100 under the sealing and cutting area.

## Claims

1. Device for sealing and cutting film for packaging systems for loose product, comprising rotating transversal shafts (1-2) synchronised with each other, to which a couple of pincers (32, 34) is engaged comprising sealing and cutting means (15), and
lower and upper pre-stretching plates (28-29),
**characterised in that**
each pincer (32, 34) is driven by said shafts (1, 2) along a path of a guiding cam recess (20), engaged with guiding wheels (20) of said pincers, composed by a circular portion (54-56) and a matched straight portion (57) for the sealing and cutting operations,
said lower pre-stretching plates (28) are movable between a rest closed position and a work open position forced along the straight path portion (57) by the contact between said lower pre-stretching plates (28) of respective pincers (32, 34) against the closure force of respective springs (10),
said upper pre-stretching plates (29) are movable between a rest closed position and a work open position forced along the straight path portion (57) by the contact between wheels (51) and a central cam (50) against the closure force of respective springs (11),
said springs (10, 11) being operatively interposed between supporting members (60, 61) fixed to the pincers (32, 34) and mobile bodies (8-9) supporting said pre-stretching plates (28, 29) rotatably mounted on said pincers (32, 34), such that they forced the motion to the rest closed position,
said transversal shafts (1, 2) being always operative at the same distance to each other.

2. Device according to claim 1, **characterized in that** said pincers (32) are provided with a cam (16) for guiding a blade (15) between a rest position and a cutting position, interacting in certain angular positions with a body (18) to which the blade (15) is engaged.

3. Device according to any of the preceding claims, **characterised in that** said pincers (32, 34) present a fissure (31, 33) transversal to the film.

4. Device according to claim 3, **characterised in that** said cutting means consist of a mobile blade (15) inside the fissure (31) of one (32) of said pincers (32, 34).

5. Device according to any of the preceding claims, **characterised in that** said lower plate (28) has a pre-stretching foot (30).

6. Device according to any of the preceding claims, **characterised in that** it comprises rigid connection shims (5) between the rotating shafts (1, 2) and transversal support bodies (3, 4).

## Patentansprüche

1. Vorrichtung zum Versiegeln und Schneiden einer Folie für Verpackungssysteme für lose Produkte, welche sich drehende Querwellen (1-2) aufweist, die miteinander synchronisiert sind, und mit denen ein Paar von Zangen (32, 34) zusammen arbeitet, welche Versiegelungs- und Schneideeinrichtungen (15) aufweisen, und
untere und obere Vorstreckplatten (28-29),
**dadurch gekennzeichnet, dass**
jede Zange (32, 34) durch die Wellen (1, 2) längs eines Weges einer Führungsnut-Ausnehmung (20) angetrieben ist, welche mit Führungsrädern (20) der Zangen zusammen arbeitet, und die einen kreisförmigen Abschnitt (54-56) und einen hierzu passenden geradlinigen Abschnitt (57) für die Versiegelungs- und Schneidvorgänge umfaßt,
die unteren Vorstreckplatten (28) zwischen einer geschlossenen Ruhestellung und einer offenen Arbeitsstellung bewegbar sind, in welcher sie längs des geradlinigen Bahnabschnitts (57) durch den Kontakt zwischen den unteren Vorstreckplatten (28) und den zugeordneten Zangen (32, 34) entgegen der Schließkraft der zugeordneten Federn (10) gedrückt werden,
die oberen Vorstreckplatten (29) zwischen einer geschlossenen Ruhestellung und einer offenen Arbeitsstellung bewegbar sind, in der sie längs des geradlinigen Bahnabschnitts (57) durch den Kontakt zwischen den Rädern (51) und einer zentralen Nocke (50) entgegen der Schließkraft der zugeordneten Feder (11) gedrückt werden,
die Federn (10, 11) betriebsverbunden zwischen Tragteilen (60, 61) angeordnet sind, welche fest mit den Zangen (32, 34) und beweglichen Körpern (8, 9) verbunden sind, angeordnet sind, wobei die beweglichen Körper die Vorstreckplatten (28, 29) tragen, welche drehbar an den Zangen (32, 34) derart angebracht sind, dass sie zwangsweise eine Bewegung in die geschlossene Ruhestellung ausführen,
und die Querwellen (1, 2) unter Einhaltung ein und desselben Abstandes zu einander arbeiten.

2. Vorrichtung nach Anspruch 1, **dadurch gekennzeichnet, dass** die Zangen (32) mit einer Nocke (16) zur Führung eines Schneidmessers (15) zwischen einer Ruhestellung und einer Schneidstellung versehen sind, wobei ein Zusammenwirken in gewissen Winkelpositionen mit einem Körper (18) gegeben ist, mit dem das Schneidmesser (15) zusammen arbeitet.

3. Vorrichtung nach einem der vorangehenden Ansprüche, **dadurch gekennzeichnet, dass** die Zangen (32, 34) einen Spalt (31, 33) quer zur Folie aufweisen.

4. Vorrichtung nach Anspruch 3, **dadurch gekennzeichnet, dass** die Schneideinrichtung ein bewegliches Schneidmesser (15) umfasst, welches im Innern des Spalts (31) einer (32) der Zangen (32, 34) angeordnet ist.

5. Vorrichtung nach einem der vorangehenden Ansprüche, **dadurch gekennzeichnet, dass** die unter Platte (28) einen Vorstreckfuß (30) hat.

6. Vorrichtung nach einem der vorangehenden Ansprüche, **dadurch gekennzeichnet, dass** sie starre Verbindungsfüllstücke (5) zwischen den sich drehenden Wellen (1, 2) und den Quertragkörpern (3,4) aufweist.

## Revendications

1. Dispositif de scellage et de coupe de film pour systèmes d'emballage pour produits en vrac, comprenant des arbres transversaux rotatifs (1-2) synchronisés l'un avec l'autre, sur lesquels sont montées deux pinces (32, 34), comprenant un moyen de scellage et de coupe (15), et
des plaques de pré-étirement inférieures et supérieures (28-29),
**caractérisé en ce que**
chaque pince (32, 34) est entraînée par lesdits arbres (1, 2) le long d'un chemin d'un évidement de came de guidage (20), en contact avec des roues de guidage (20) desdites pinces, composé d'une partie circulaire (54-56) et d'une partie droite adaptée (57) pour les opérations de scellage et de coupe,
lesdites plaques de pré-étirement inférieures (28) sont mobiles entre une position de repos, fermée, et une position de travail, ouverte, forcées le long de la partie de chemin droite (57) par le contact entre lesdites plaques de pré-étirement inférieures (28) des pinces respectives (32, 34) contre la force de fermeture de ressorts respectifs (10),
lesdites plaques de pré-étirement supérieures (29) sont mobiles entre une position de repos, fermée, et une position de travail, ouverte, forcées le long de la partie de chemin droite (57) par le contact entre des roues (51) et une came centrale (50) contre la force de fermeture de ressorts respectifs (11),
lesdits ressorts (10, 11) étant intercalés de manière fonctionnelle entre des éléments de support (60, 61) fixés aux pinces (32, 34) et des corps mobiles (8-9) supportant lesdites plaques de pré-étirement (28, 29) montées à rotation sur lesdites pinces (32, 34), de sorte qu'ils ont forcé le mouvement jusqu'à la position de repos fermée,
lesdits arbres transversaux (1, 2) fonctionnant toujours à la même distance l'un de l'autre.

2. Dispositif selon la revendication 1, **caractérisé en ce que** lesdites pinces (32) sont pourvues d'une came (16) pour guider une lame (15) entre une position de repos et une position de coupe, interagissant dans certaines positions angulaires avec un corps (18) avec lequel la lame (15) est en contact.

3. Dispositif selon l'une quelconque des revendications précédentes, **caractérisé en ce que** lesdites pinces (32, 34) présentent une fente (31, 33) transversale au film.

4. Dispositif selon la revendication 3, **caractérisé en ce que** ledit moyen de coupe consiste en une lame mobile (15) à l'intérieur de la fente (31) de l'une (32) desdites pinces (32, 34).

5. Dispositif selon l'une quelconque des revendications précédentes, **caractérisé en ce que** ladite plaque inférieure (28) comporte un pied de pré-étirement (30).

6. Dispositif selon l'une quelconque des revendications précédentes, **caractérisé en ce qu'**il comprend des cales de connexion rigides (5) entre les arbres rotatifs (1, 2) et des corps de support transversaux (3, 4).
